(19) Europäisches Patentamt / European Patent Office / Office européen des brevets

(11) **EP 3 720 185 B1**

(12) **FASCICULE DE BREVET EUROPEEN**

(45) Date de publication et mention
de la délivrance du brevet:
**04.05.2022   Bulletin 2022/18**

(21) Numéro de dépôt: **20166082.6**

(22) Date de dépôt: **26.03.2020**

(51) Classification Internationale des Brevets (IPC):
*H04W 48/18* $^{(2009.01)}$      *H04W 36/36* $^{(2009.01)}$

(52) Classification Coopérative des Brevets (CPC):
**H04W 48/18;** H04W 36/165

(54) **MÉTHODE D'ASSOCIATION EN FONCTION D'UNE TRANCHE DE RÉSEAU DANS UN RÉSEAU HÉTÉROGÈNE**

ZUORDNUNGSMETHODE ÜBER EIN TEIL-NETZWERK IN EINEM HETEROGENEN NETZWERK

METHOD FOR COMBINATION ACCORDING TO A NETWORK WAFER IN A HETEROGENEOUS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **01.04.2019   FR 1903461**

(43) Date de publication de la demande:
**07.10.2020   Bulletin 2020/41**

(73) Titulaires:
  • **Commissariat à l'énergie atomique et aux énergies alternatives**
    **75015 Paris (FR)**
  • **Institut Mines-Telecom**
    **75014 Paris (FR)**

(72) Inventeurs:
  • **DE DOMENICO, Antonio**
    **38054 Grenoble Cedex 9 (FR)**
  • **GHATAK, Gourab**
    **38054 Grenoble Cedex 9 (FR)**

  • **COUPECHOUX, Marceau**
    **94200 Ivry sur Seine (FR)**

(74) Mandataire: **Brevalex**
    **56, Boulevard de l'Embouchure**
    **B.P. 27519**
    **31075 Toulouse Cedex 2 (FR)**

(56) Documents cités:
    **EP-A1- 3 089 516     EP-A1- 3 451 726**

  • **GHATAK GOURAB ET AL: "Coverage Analysis and Load Balancing in HetNets With Millimeter Wave Multi-RAT Small Cells", IEEE TRANSACTIONS ON WIRELESS COMMUNICATIONS, IEEE SERVICE CENTER, PISCATAWAY, NJ, US, vol. 17, no. 5, 1 mai 2018 (2018-05-01), pages 3154-3169, XP011683453, ISSN: 1536-1276, DOI: 10.1109/TWC.2018.2807426 [extrait le 2018-05-08]**

## Description

## DOMAINE TECHNIQUE

La présente invention concerne le domaine des réseaux cellulaires hétérogènes de cinquième génération (5G) et plus particulièrement ceux mettant en œuvre un accès radio multitechnologie ou multi-RAT (multiple Radio Access Technologies).

## ÉTAT DE LA TECHNIQUE ANTÉRIEURE

Les réseaux de télécommunications cellulaires hétérogènes ou HetNets représentent une des solutions les plus prometteuses pour le développement de la prochaine génération de téléphonie mobile (5G). De manière générale, un réseau cellulaire hétérogène est composé de plusieurs niveaux *(tiers)* de cellules ayant différentes tailles : macro-cellules *(macrocells)* et petites cellules *(small cells)* telles que femtocellules *(femtocells)* et picocellules *(picocells)*. Cette nouvelle génération fera également appel à des réseaux d'accès multitechnologie ou multi-RAT *(multi Radio Access Technology),* c'est-à-dire à des réseaux utilisant différentes technologies d'accès radio pouvant utiliser différentes bandes de fréquences, par exemple Wi-Fi et 3G.

Nous considérerons dans la suite des réseaux cellulaires hétérogènes à multitechnologie d'accès radio (multi-RAT HetNets). Un exemple représentatif d'un tel réseau est constitué de deux couches de cellules : une première couche de cellules comprend des macro-cellules opérant dans la gamme hyperfréquence au-dessous de 6 GHz (bande dénommée ci-après sub-6 GHz). Les macro-cellules sont servies par des stations de base, désignées par MBSs (Macro Base Stations). A cette première couche de cellules s'ajoute une seconde couche composée de petites cellules opérant à la fois dans la gamme sub-6 Ghz et dans la gamme millimétrique (25GHz-300GHz). Les petites cellules sont servies par des stations de base désignées par multi-RAT SBSs (multi Radio Access

Technology Small Base Stations). Des exemples se trouvent dans EP 3089516 et EP 3451726.

Alors que les stations de base MBSs du réseau conventionnel assurent une couverture continue aux utilisateurs, les stations de base multi-RAT SBSs permettent de fournir des débits élevés en exploitant conjointement les bandes sub-6 GHz et millimétrique.

Dans les réseaux HetNets conventionnels (c'est-à-dire monotechnologie), on recourt à des mécanismes de transfert de charge *(offloading)* des stations de base MBSs des macrocellules vers les stations de base SBSs des petites cellules. Un tel mécanisme de transfert, connu sous l'acronyme de CRE (Cell Range Expansion), consiste à ajouter un biais positif à la puissance du signal reçu de la station de base SBS avant de la comparer à la puissance du signal reçu par la station de base MBS. Ainsi, à puissance de réception égale, le terminal mobile s'associe à une station de base SBS plutôt qu'à une station de base MBS. On a pu montrer que, dans les réseaux HetNets conventionnels, le mécanisme précité conduit en moyenne à une dégradation du rapport du rapport signal sur bruit plus interférence ou SNIR (Signal to Noise and Interference Ratio) au niveau du terminal.

Il a été récemment proposé d'étendre ce mécanisme de transfert aux réseaux HetNet multitechnologie dans l'article de G. Ghatak et al. intitulé « Coverage analysis and load balancing in HetNets with mm-wave multi-RAT small cells » publié dans IEEE Transactions on Wireless Communications, vol. 17 , N°5 , Mai 2018, pp. 3154-3169. Le mécanisme de transfert qui y est décrit met en œuvre, d'une part, un premier biais permettant d'arbitrer entre une association à une station de base MBS et une association à une station de base SBS, et, d'autre part, un second biais permettant d'arbitrer entre une association à une station de SBS via un accès sub-6 Ghz et un accès dans la bande millimétrique.

Ce mécanisme de transfert fonctionne bien lorsque les utilisateurs ont des besoins relativement homogènes en termes de qualité de service (QoS). Toutefois, la nouvelle génération (5G) de réseaux cellulaires permettra une grande variété de cas d'utilisation *(use cases)* et de classes de services. Par exemple, l'organisation 3GPP prévoit qu'elle devra supporter des communications de très haute fiabilité et faible latence ou URLLC *(Ultra Reliable Low Latency Communications),* notamment pour les missions critiques et les véhicules autonomes, des communications massives de type machine ou mMTC *(massive Machine Type Communications),* notamment pour l'Internet des Objets (IoT), et des communications à très haut débit ou eMBB *(enhanced Mobile Broadband)*, notamment pour les applications mobiles multimedia ou le transfert de gros fichiers.

La technique dite de « *network slicing* » permet, à partir d'une même architecture de réseau physique, de créer des tranches de réseau, chaque tranche pouvant être considérée comme une instance de réseau virtuel associé à un ensemble de fonctions (telles que par exemple eNB, SGW ou MME) et de ressources, et opérant sur l'architecture physique sous-jacente. Une description de cette technique d'instanciation pourra être trouvée dans l'article de D.S. Michalopoulos et al. intitulé « Network slicing via function décomposition and flexible network design » publié dans Personal, Indoor, and Mobile Radio Communications (PIMRC), 2017 IEEE 28th Annual International Symposium on. IEEE, 2017, pp. 1-6. L'instanciation de réseau virtuel est mise à profit pour satisfaire différentes classes de service dans les futurs réseaux 5G. Ainsi, par exemple, pourront coexister sur un même réseau physique une tranche de réseau dédiée à des communications eMBB, une tranche de réseau dédiée aux communications URLLC et une tranche de réseau dédiée aux communications mMTC. Le réseau physique peut notamment être alors un réseau HetNet multi-technologie tel que mentionné précédemment.

L'instanciation de réseau virtuel peut s'étendre au réseau d'accès radio ou RAN *(on* parle alors de « RAN slicing »), autrement dit le réseau virtuel est alors défini de bout en bout et composé d'une tranche de réseau cœur *(core network slice)* et d'une tranche de réseau d'accès *(RAN network slice).* Les tranches de réseau d'accès comprenant également la partie radio entre le terminal mobile et la station de base, la méthode d'association doit pouvoir tenir compte de cette instanciation.

Le but de la présente invention est de proposer une méthode d'association qui soit bien adaptée à une instanciation de tranches de réseau, lorsque le réseau physique sous-jacent comprend des cellules de différents types, en particulier pour des réseaux HetNet multi-RAT actuellement envisagés dans le déploiement de la génération 5G.

## EXPOSÉ DE L'INVENTION

La présente invention est définie par une méthode d'association d'un terminal mobile à une cellule d'un réseau cellulaire comprenant au moins des cellules d'un premier type et des cellules d'un second type distinct du premier, une pluralité de tranches de réseau $L_k$, $k = 1,..., K$ étant instanciées à partir dudit réseau cellulaire, chaque tranche de réseau $L_k$ offrant une classe de service $C_k$, caractérisée par une pluralité de contraintes $\Lambda_{i,k}$, $i = 1,.., N$, $k = 1,..., K$ sur des métriques de qualité de service, le terminal mobile mesurant la puissance la plus élevée reçue d'une cellule du premier type, $P_1$, et la puissance la plus élevée reçue d'une cellule du second type, $P_2$, le terminal mobile s'associant avec ladite cellule du premier type si $P_1 > QP_2$ et avec ladite cellule du second type sinon, où $Q$ est une valeur de biais. La dite méthode d'association est spécifique en ce que le réseau détermine pour chaque contrainte $\Lambda_{i,k}$ un ensemble de valeurs de biais, $SQ_{i,k}$, permettant de satisfaire cette contrainte et que l'on en déduit la valeur de biais optimale, $Q_{R,k}^{opt}$, appartenant à l'intersection des ensembles $SQ_{i,k}$, $i = 1,.., N$ permettant de maximiser une fonction d'objectif portant sur une métrique de qualité de service , et que le terminal mobile requérant une qualité de service $C_k$ s'associe avec ladite cellule du premier type si $P_1 > Q_{R,k}^{opt} P_2$ et avec ladite cellule du second type sinon.

Selon un premier mode de réalisation, la fonction d'objectif porte sur une métrique de qualité de service relative à la liaison entre le terminal mobile et une station de base d'une cellule du premier type ou du second type du réseau.

Les métriques de qualité de service peuvent notamment comprendre : la fiabilité de la liaison entre le terminal mobile et la station de base servant la cellule du premier type ou du second type, le débit de cette liaison sur la voie descendante, la couverture de la cellule du premier ou second type pour un niveau donné de rapport signal sur bruit plus interférence.

Le réseau est par exemple un réseau HetNet multi-RAT et les classes de qualité de service comprennent alors les classes eMBB et URLLC.

Avantageusement, le réseau détermine au préalable, pour une pluralité de contraintes prédéterminées, $\Lambda_{i,m}$ correspondant chacune à N-uplet de valeurs discrétisées de métriques de qualité de service $\left( \rho_{i,m}^{*} \right)$, des seconds ensembles de valeurs de biais $(SQ_{i,m})$ permettant de satisfaire respectivement chacune de ces contraintes prédéterminées.

Selon une première variante, le terminal mobile requiert une qualité de service $C_k$, et le réseau détermine parmi la pluralité de contraintes prédéterminées, l'ensemble de celles $(\Lambda_{i,m_k})$, $i = 1,..., N$ qui est le mieux à même à satisfaire cette qualité de service, et lit dans une mémoire les seconds ensembles de valeurs de biais $(SQ_{i,m_k}, i = 1,..., N)$ correspondants.

Selon une seconde variante, le réseau détermine la valeur optimale de biais appartenant à l'intersection des seconds ensembles ainsi lus, permettant de maximiser ladite fonction d'objectif.

Selon une troisième variante, le réseau transmet au terminal mobile les seconds ensembles ainsi lus et le terminal mobile détermine la valeur optimale de biais appartenant à l'intersection des seconds ensembles ainsi lus, permettant de maximiser ladite fonction d'objectif.

Selon un second mode de réalisation, la fonction d'objectif porte sur une métrique de qualité de service relative à une tranche du réseau $(L_k)$, la valeur de biais optimale $\left( Q_{R,L_k}^{opt} \right)$ étant alors commune à tous les terminaux mobiles servis par cette tranche.

Selon un troisième mode de réalisation, la fonction d'objectif porte sur une combinaison d'une première métrique de qualité de service relative à une première tranche du réseau $(L_k)$ et d'une seconde métrique de qualité de service relative à une seconde tranche du réseau ($L_{k'}$), une première valeur de biais optimale $\left(Q_{R,L_k}^{opt}\right)$ étant alors commune à tous les terminaux mobiles servis par la première tranche de réseau et une seconde valeur de biais optimale $\left(Q_{R,L_{k'}}^{opt}\right)$ étant commune à tous les terminaux mobiles servis par la seconde tranche de réseau .

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente un ordinogramme d'une méthode d'association selon un mode général de réalisation de l'invention ;
La Fig. 2 représente un ordinogramme d'une méthode d'association selon un mode particulier de réalisation de l'invention.

## EXPOSÉ DÉTAILLÉ DE MODES DE RÉALISATION PARTICULIERS

On considérera dans la suite un réseau cellulaire comportant différents types de cellules, par exemple des cellules correspondant à différentes tailles de couverture (par exemple réseau HetNet) et/ou un réseau permettant à un terminal mobile de s'associer à un point d'accès (AP) du réseau au moyen de différentes technologies (par exemple réseau multi-RAT). Par technologie, on entend ici différentes ressources physiques de transmission, par exemple différentes bandes de fréquence.

On suppose également qu'une pluralité de tranches de réseau et plus particulièrement de réseau d'accès sont instanciées à partir du réseau cellulaire. Chaque tranche de réseau est caractérisée par une ou plusieurs contraintes sur des métriques de qualité de service (QoS), ces contraintes permettant de servir une classe de service donnée. Plus précisément, chaque tranche de réseau peut être décrite par un vecteur, QoS, dont les composantes $QoS_i$, $i$ =1,..., $N$ sont des métriques portant sur un paramètre de qualité de liaison, dites métriques de QoS, certaines d'entre elles devant vérifier une ou plusieurs contraintes.

Parmi les métriques QoS, on peut citer par exemple le taux d'erreur paquet sur la liaison entre le terminal mobile ($PER$) , le taux de couverture de la cellule pour un niveau de rapport de signal à bruit plus interférence (SINR) donné ($\eta_{SINR}$) , le débit sur la voie montante ($\lambda_{up}$) , le débit sur la voie descendante ($\lambda_{down}$), etc. Sans perte de généralité, on supposera que ces métriques sont exprimées sous la forme d'une fonction croissante de la qualité de la liaison. Ainsi, par exemple, les métriques de QoS pourront être l'inverse du taux d'erreur paquet de la liaison, $QoS_1 = 1 / PER$, le taux de couverture, $QoS_2 = \eta_{SINR}$, $QoS_3 = \lambda_{down}$ le débit sur voie descendante.

A chaque tranche de réseau, $L_k$, $k$ = 1,..., $K$ , est associée une fonction d'objectif, $f_k$, portant sur au moins une composante du vecteur QoS . Plus précisément, lorsqu'un utilisateur requiert une classe de service donnée (eMBB, URLLC, mMTC, etc..), le réseau cherche à maximiser la fonction d'objectif associée à la tranche $L_k$, de classe de service $C_k$.

Ainsi, par exemple, si l'on considère les tranches de réseau eMBB et URLLC définies précédemment, les fonctions d'objectif correspondantes peuvent être définies par :

$$f_{eMBB}(\mathbf{QoS}) = \max\left\{QoS_3 \,\middle|\, QoS_1 \geq \rho_1, QoS_2 \geq \rho_2\right\} \qquad (1\text{-}1)$$

$$f_{URLLC}(\mathbf{QoS}) = \max\left\{QoS_1 \,\middle|\, QoS_2 \geq \rho'_2, QoS_3 \geq \rho'_3\right\} \qquad (1\text{-}2)$$

On comprend ainsi que la fonction d'objectif relative à la tranche eMBB vise à maximiser le débit sur la voie descendante tout en observant un taux d'erreur paquet inférieur à un taux maximal et un taux de couverture supérieur à un taux minimal. De manière similaire, la fonction d'objectif relative à la tranche URLLC vise à minimiser le taux d'erreur paquet tout en respectant un débit minimal sur la voie descendante et un taux de couverture minimal.

L'association d'un terminal mobile à une station de base se fait sur la base d'un critère de niveau de puissance reçue (RSSI). Lorsqu'un réseau est composé d'un seul type de cellule, le terminal mobile s'associe classiquement à la station de base dont il reçoit le plus fort signal. Lorsque le réseau comporte au moins deux types de cellules distincts, tel que celui considéré dans le cadre de la présente invention, on peut introduire un biais de manière à favoriser l'un ou l'autre type de cellule. Ainsi, par exemple, si l'on note $P_1$ la puissance la plus élevée reçue par le terminal mobile d'une station de base, $BS_1$, servant une cellule du type 1 et $P_2$ la puissance la plus élevée reçue par ce terminal mobile, d'une station de base, $BS_2$, servant une cellule du type 2, le terminal pourra être associé à la station $BS_1$ si $P_1 > Q_R P_2$ et à la station $BS_2$ dans le cas contraire, où $Q_R > 1$ est un biais de puissance visant à favoriser l'association avec une cellule de type 2 plutôt qu'à une cellule de type 1. Tout se passe donc comme si, toutes choses étant égales par ailleurs, la puissance d'émission de la station de base de type 2 était artificiellement augmentée par un facteur de biais.

En présence de deux types de cellules dans le réseau, la probabilité qu'une métrique de qualité de liaison vérifie une certaine contrainte, dépend de la probabilité d'association avec chaque type de cellule et de la probabilité que chaque type de cellule vérifie cette contrainte, autrement dit :

$$P(QoS_i \geq \rho_i) = P(QoS_i \geq \rho_i | TBS_1).P(TBS_1) + P(QoS_i \geq \rho_i | TBS_2).P(TBS_2) \qquad (2)$$

où $P(QoS_i \geq \rho_i | TBS_1)$, resp. $P(QoS_i \geq \rho_i | TBS_2)$, est la probabilité que la contrainte $QoS_i \geq \rho_i$ soit vérifiée lorsque le terminal $T$ est associé à une station de base de type 1, resp. de type 2, et $P(TBS_1)$, resp. $P(TBS_2)$ est la probabilité que le terminal $T$ soit associé à une station de base de type 1, resp. de type 2.

La probabilité d'association avec une station de base d'un type donné dépend généralement de la puissance de la station de base, de la distance du terminal à cette station de base et de l'état de visibilité de la station de base en question. Si l'on connait les positions des différentes stations de base, on peut supposer que la position du terminal mobile obéit à une loi uniforme de distribution spatiale dans la zone concernée (par exemple un axe de communication). En revanche, si l'on ne connaît pas les positions des différentes stations de base, on pourra supposer que les positions des stations de base de différents types suivent un processus stochastique de Poisson ponctuel dans la zone concernée. De même, on pourra supposer que les états de visibilité LOS *(Line Of Sight)* et NLOS *(Non Light Of Sight)* suivent un modèle de sphère de LOS *(LOS bail model)*. La probabilité d'association du terminal mobile avec une station de base de l'un ou l'autre type dépend enfin des caractéristiques du canal de propagation et des gains d'antenne de ces stations de base, si leurs antennes ne sont pas omnidirectionnelles.

Ainsi, de manière générale, la probabilité d'association du terminal mobile avec une station de base d'un type donné dépend donc d'un certain nombre de paramètres du réseau, tels que la puissance d'émission, la densité de distribution des stations de base de ce type, probabilité de distribution angulaire des lobes d'antennes de ces stations de base, etc.

En outre, si un certain type de station de base est favorisé par un facteur de biais, sa puissance d'émission est artificiellement augmentée d'un facteur $Q_R$ comme on l'a vu plus haut. Ainsi, $P(TBS_2)$ peut s'exprimer sous la forme :

$$P(TBS_2) = F(Q_R, SNP) \qquad (3-1)$$

où F est une fonction donnée, $Q_R$ est le facteur de biais, et *SNP* est un ensemble de paramètres du réseau. Si seuls deux types de cellules sont présents dans le réseau, on a :

$$P(TBS_1) = 1 - F(Q_R, SNP) \qquad (3-2)$$

Etant donné que, sauf exception, $P(QoS_i \geq \rho_i | TBS_1) \neq P(QoS_i \geq \rho_i | TBS_2)$, la probabilité de satisfaire à une contrainte de qualité de service, $P(QoS_i \geq \rho_i)$, dépend aussi de $Q_R$ et des paramètres du réseau.

Plus généralement, si le réseau est constitué de cellules appartenant à une pluralité de types, on pourra hiérarchiser ces types de cellules en leur affectant des biais de différentes valeurs. La probabilité de satisfaire à une contrainte de qualité de service peut se décomposer sous une forme analogue à celle de (2) à partir des probabilités d'association aux différents types de cellules et des probabilités conditionnelles de satisfaire à ces contraintes. Pour des raisons de simplification de la présentation et sans perte de généralité, nous supposerons qu'un seul type de cellule est favorisé et donc que les probabilités de satisfaire les contraintes sur les métriques de qualité de service ne dépendent que d'un seul facteur de biais, $Q_R$.

Pour chaque contrainte $\Lambda_i$ sur une métrique de QoS participant à la définition à une classe de service, on peut déterminer l'ensemble, $SQ_i$, des valeurs de biais permettant de satisfaire cette contrainte, soit :

$$SQ_i = \{Q_R | QoS_i \geq \rho_i\} \qquad (4)$$

On considère maintenant une tranche de réseau $L_k$ définie par un ensemble de contraintes $\Lambda_{i,k}$ sur les composantes $QoS_i$, $i = 1,..., N$ du vecteur, **QoS**. Cette tranche est délimitée par $N$ hyperplans, définis par $QoS_i \geq \rho_{i,k}$ dans

l'espace $i^N$. Les ensembles de valeurs de biais permettant de satisfaire ces contraintes sont notés $SQ_{i,k} = \{Q_R | QoS_i \geq \rho_{i,k}\}$.

La valeur de biais optimale pour la tranche de réseau $L_k$ est alors donnée par :

$$Q_{R,k}^{opt}(\boldsymbol{\rho}) = \arg\max_{Q_R} \left( f_k(\mathbf{QoS}) \middle| Q_R \in \bigcap_{i=1}^{N} SQ_{i,k} \right) \qquad (5)$$

où p est le $N$-uplet défini par $\rho_{1,k}, \rho_{2,k}, ..., \rho_{N,k}$.

Afin de déterminer avec quel type de station de base, le terminal mobile souhaitant se connecter au réseau en bénéficiant de la classe de service $C_k$, est associé, on compare $P_1$ et $Q_{R,k}^{opt}(\boldsymbol{\rho})P_2$ : si $P_1 > Q_{R,k}^{opt}(\boldsymbol{\rho})P_2$, terminal mobile s'associe à la station de base de type 1 de plus forte puissance reçue et, dans le cas contraire, avec la station de base de type 2 de plus forte puissance reçue.

Le calcul de la valeur de biais optimale pour chaque tranche de réseau, $L_K$, $k = 1,..., K$ est de préférence effectué par le réseau et cette valeur est transmise au terminal, ce dernier se chargeant de comparer les puissances $P_1$ et $Q_{R,k}^{opt}(\boldsymbol{\rho})P_2$.

Le calcul de la valeur de biais optimale peut être effectué de manière exhaustive si l'ensemble $\bigcap_{i=1}^{N} SQ_{i,k}$ est réduit à quelques éléments. A défaut, il peut être calculé à partir de la fonction d'objectif selon une méthode dite de *random-restart hill climbing* connue en soi. Une description de cette méthode pourra être trouvée dans l'article de G. Ghatak, A. De Domenico and M. Coupechoux, intitulé "Coverage Analysis and Load Balancing in HetNets With Millimeter Wave Multi-RAT Small Cells," in IEEE Transactions on Wireless Communications, vol. 17, no. 5, pp. 3154-3169, Mai 2018. Pour chaque valeur de $Q_R \in \bigcap_{i=1}^{N} SQ_{i,k}$, et pour un ensemble *SNP* de paramètres du réseau fixé, on calcule la valeur de la fonction d'objectif. On déterminer alors la valeur de $Q_R$ conduisant à la plus grande valeur de la fonction d'objectif.

Alternativement, selon un second mode de réalisation, le réseau peut discrétiser l'espace des métriques de QoS au moyen d'une pluralité de valeurs typiques, ce qui revient à paver l'espace $i^N$. Ainsi, la métrique $QoS_i$ pourra être discrétisée en une pluralité $M$ de valeurs prédéfinies de $\rho_i$, notées $\rho_{i,1}^*$, $\rho_{i,2}^*$,..., $\rho_{i,M}^*$, chacune de ces valeurs définissant une contrainte $\Lambda_{i,m}$ par $QoS_i \geq \rho_{i,m}^*$ et le réseau déterminera alors pour chacune de ces valeurs l'ensemble $SQ_{i,m} = \left\{ Q_R \middle| QoS_i \geq \rho_{i,m}^* \right\}$. Le réseau recherche ensuite pour chaque $N$-uplet $\boldsymbol{\rho}^* = \rho_{i,m(1)}^*, \rho_{i,m(2)}^*,..., \rho_{i,m(N)}^*$, la valeur optimale :

$$Q_{R,k}^{opt}(\boldsymbol{\rho}^*) = \arg\max_{Q_R} \left( f_k(\mathbf{QoS}) \middle| Q_R \in \bigcap_{i=1}^{N} SQ_{i,m(i)} \right) \qquad (6)$$

Lorsque le terminal mobile souhaite s'associer au réseau en bénéficiant d'une classe de service $C_k$ définie par les contraintes $\Lambda_{i,k} : QoS_i \geq \rho_{i,k}$, $i = 1,..., N$, on détermine les valeurs consécutives $\rho_{i,m_k-1}^*, \rho_{i,m_k}^* \in \left\{ \rho_{i,1}^*, \rho_{i,2}^*,..., \rho_{i,M}^* \right\}$ encadrant $\rho_{i,k}$, soit : $\rho_{i,m_k-1}^* \leq \rho_{i,k} < \rho_{i,m_k}^*$. L'ensemble des contraintes $\Lambda_{i,m_k}$, $i = 1,..., N$, est le mieux à même à satisfaire la classe de service $C_k$ requise par l'utilisateur. On retient finalement comme valeur de biais celle donnée par :

$$Q_{R,k}^{opt}\left(\boldsymbol{\rho}^*\right) = \arg\max_{Q_R}\left(f_k\left(\mathbf{QoS}\right)\middle| R \in \prod_{i=1}^{N} SQ_{i,m_k}\right) \qquad (7)$$

Cette valeur de biais permet de satisfaire l'ensemble des contraintes liées à la classe de service requise.

Avantageusement, les ensembles $SQ_{i,m}$ peuvent être déterminés une fois pour toutes par le réseau. Le calcul des valeurs de biais optimales $Q_{R,k}^{opt}\left(\boldsymbol{\rho}^*\right)$ peut également être effectué une fois pour toutes par le réseau et stocké dans une mémoire. Il suffit alors au réseau de déterminer, à partir des contraintes $\Lambda_{i,k}$, le $N$-uplet $\rho_{i,m_k}^*$, $i = 1,..,N$ et de lire dans cette mémoire la valeur de biais optimale correspondante pour la transmettre au terminal mobile.

Selon une variante, les ensembles $SQ_{i,m}$ sont transmis au terminal mobile et celui-ci calcule la valeur optimale $Q_{R,k}^{opt}\left(\boldsymbol{\rho}^*\right)$ en fonction de la classe de service $C_k$ requise.

Le mode de réalisation discrétisé est préféré lorsque le calcul direct de la valeur optimale $Q_{R,k}^{opt}\left(\boldsymbol{\rho}\right)$ est trop complexe. Ce pourra notamment être le cas lorsque le nombre de tranches de réseau est important et/ou lorsque le nombre de valeurs de métriques de QoS distinctes, $\rho_{i,k}$, requises par les différents utilisateurs voire des services demandés par différents utilisateurs, est élevé.

Le mode de sélection de la valeur de biais optimale ( $Q_{R,k}^{opt}\left(\boldsymbol{\rho}\right)$ ou $Q_{R,k}^{opt}\left(\boldsymbol{\rho}^*\right)$ ) décrit ci-dessus vise à satisfaire au mieux le besoin de chaque utilisateur en maximisant la fonction d'objectif de la classe de service requise. En d'autres termes, la fonction d'objectif était centrée sur l'utilisateur *(user centric objective function)*. Alternativement, dans certains scenarii de déploiement, il peut être préférable d'optimiser une fonction d'objectif portant sur l'ensemble du réseau. Par exemple, si tous les utilisateurs requérant une certaine classe de service sont systématiquement associés à des stations de base d'un certain type, il peut en résulter une dégradation des performances globale du réseau.

Dans un tel cas, selon un troisième mode de réalisation, on préférera calculer la valeur de biais en maximisant une fonction d'objectif portant sur la tranche du réseau, c'est-à-dire l'ensemble des utilisateurs servis par cette tranche :

$$Q_{R,L_k}^{opt}\left(\boldsymbol{\rho}\right) = \arg\max_{Q_R}\left(F_k\left(\mathbf{QoS}\right)\middle| Q \in \prod_{i=1}^{N} SQ_{i,k}\right) \qquad (8)$$

où la notation $Q_{R,L_k}^{opt}$ signifie que la valeur de biais est ici commune à la tranche du réseau, et la fonction $F_k$ (QoS) est une fonction d'objectif relatif à la tranche du réseau.

La fonction $F_k$ (QoS) peut notamment être définie comme une fonction (par exemple la somme ou bien la valeur moyenne) des fonctions d'objectif individuelles $f_k$ (QoS) des utilisateurs servis par cette tranche. Alternativement, $F_k$ (QoS) pourra être une fonction n'impactant pas directement la performance des utilisateurs telle que la charge de la tranche du réseau ou sa consommation énergétique, etc.

Dans ce troisième mode de réalisation, la détermination de la valeur de biais optimale $Q_{R,L_k}^{opt}$ est réalisée par le réseau et communiquée à l'ensemble des utilisateurs souhaitant être servis par la tranche de réseau en question.

Ainsi, chaque utilisateur comparera $P_1$ et $Q_{R,L_k}^{opt}\left(\boldsymbol{\rho}\right)P_2$ , où $P_1$ , $P_2$ sont respectivement la puissance la plus élevée reçue par une station de base de type 1 et la puissance la plus élevée reçue par une station de base de type 2, pour déterminer s'il s'associe à une station de base de l'un ou l'autre type.

Dans un quatrième mode de réalisation, la détermination de la valeur optimale du biais peut viser à satisfaire une fonction d'objectif portant sur une première métrique de qualité de service relative à une première tranche de réseau et une seconde métrique de qualité de service relative à une seconde tranche de réseau. Ainsi par exemple si le peuplement d'une tranche de réseau $L_k$ se fait au prix de la dégradation de la qualité de service d'une autre tranche $L_{k'}$, le réseau pourra rechercher le couple optimal de valeurs de biais :

$$\left( Q_{R,L_k}^{opt}\left(\boldsymbol{\rho}\right), Q_{R',L_{k'}}^{opt}\left(\boldsymbol{\rho'}\right)\right) = \underset{Q_R,Q_{R'}}{\arg\max}\left( F_{eMBB,URLLC}\left(\mathbf{QoS}_k,\mathbf{QoS}_{k'}\right)\bigg| Q_R \in \left(\coprod_{i=1}^{N} SQ_{i,k}\right); Q_{R'} \in \left(\coprod_{i=1}^{N} SQ_{i,k'}\right)\right)$$

$$(9)$$

où l'on a noté respectivement $\mathbf{QoS}_k$, $\mathbf{QoS}_{k'}$ les vecteurs de qualité de service relatifs aux tranches de réseau $L_k$, $L_{k'}$ et

où $F_{k,k'}$ est une fonction d'objectif portant sur les deux tranches en question. La valeur de biais $Q_{R,L_k}^{opt}$ est alors commune à tous les terminaux mobiles servis par la tranche de réseau $L_k$ et la valeur de biais $Q_{R,L_{k'}}^{opt}$ est commune à tous les terminaux mobiles servis par la tranche de réseau $L_{k'}$.

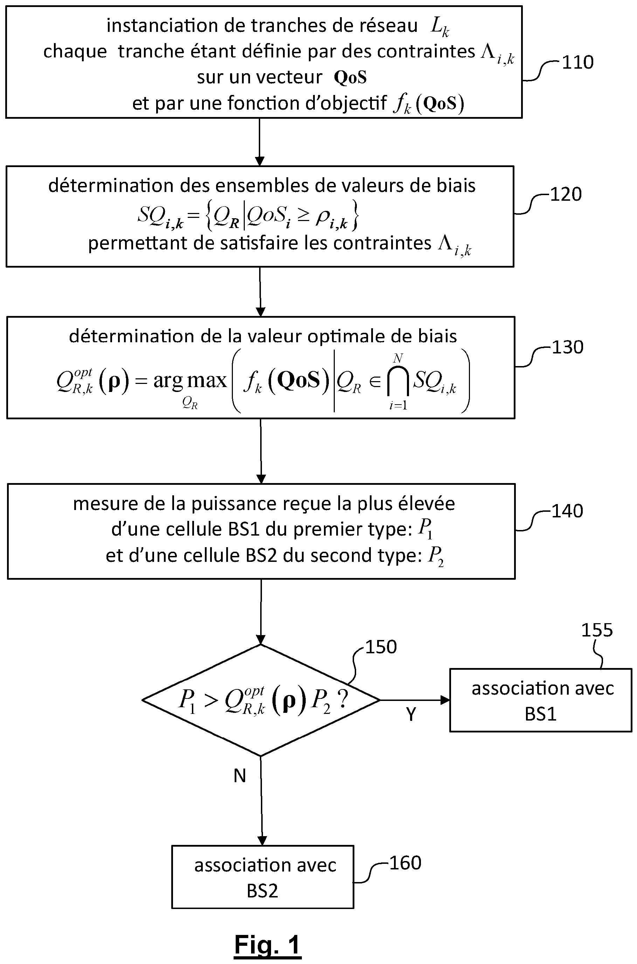

La Fig. 1 représente de manière schématique un ordinogramme d'une méthode d'association selon un mode général de réalisation de l'invention.

On considère à nouveau un réseau cellulaire comprenant des cellules d'un premier type et des cellules d'un second type.

Dans une première étape, 110, on crée une pluralité de tranches de réseau possibles, $L_k$, $k = 1,.., K$, à partir du réseau cellulaire, chaque tranche étant associée à une classe de service définie par une pluralité de contraintes $\Lambda_{i,k}$ portant sur un vecteur $\mathbf{QoS}$ dont les composantes sont des métriques de qualité de service.

A l'étape 120, on détermine pour chacune de ces contraintes, un ensemble de valeurs de biais $SQ_{i,k} = \{Q_R | QoS_i \geq \rho_{i,k}\}$ permettant de vérifier cette contrainte.

Les étapes 110 et 120 sont effectuées par le réseau.

A l'étape 130, lorsqu'un terminal mobile souhaite s'associer avec une station de base du réseau (lors d'une procédure de contrôle d'admission par exemple) pour bénéficier d'une classe de service $C_k$ associée à la tranche de réseau $L_k$, on détermine la valeur optimale de biais au moyen de (6) ou (7) selon le premier ou second mode de réalisation, ou bien au moyen de (8) ou (9) selon le troisième ou quatrième mode de réalisation.

A titre d'illustration, on a supposé que le premier mode de réalisation était implémenté, la valeur optimale de biais étant alors $Q_{R,k}^{opt}\left(\boldsymbol{\rho}\right)$.

Selon le cas, l'étape 130 peut être effectuée par le réseau (1er, 3ème et 4ème mode réalisation) ou par le terminal mobile (2nd mode de réalisation).

A l'étape 140, le terminal mobile mesure la puissance la plus élevée reçue d'une station de base servant un premier type de cellule, $P_1$, et la puissance la plus élevée reçue d'une station de base servant un second type de cellule, $P_2$. Cette étape peut bien entendu être effectuée en parallèle et/ou avant l'une des étapes précédentes.

A l'étape 150, le terminal mobile compare $P_1$ et le produit de $P_2$ avec la valeur de biais optimale déterminée à l'étape 130 (ici $Q_{R,k}^{opt}\left(\boldsymbol{\rho}\right)$). Si $P_1$ excède $Q_{R,k}^{opt}\left(\boldsymbol{\rho}\right)P_2$, le terminal mobile s'associe avec la station de base du premier type de cellule en 155 et, dans le cas contraire, avec la station de base du second type de cellule, en 160.

L'invention sera illustrée ci-après dans le cas particulier d'un réseau hétérogène à multitechnologie d'accès radio, autrement dit multi-tier multi-RAT.

Sans perte de généralité, on suppose que le réseau comprend des cellules de tailles différentes : des macro-cellules (servies par des stations de base MBSs) opérant dans la bande sub-6GHz (c'est-à-dire de 0,7 à 6 GHz) et des minicellules (servies par des stations de base SBSs) équipées à la fois avec des antennes dans la bande sub-6GHz et des antennes dans la bande millimétrique (25 à 300 MHz). Ainsi, on peut considérer que le réseau comprend trois types de cellules (ou de stations de base) au sens défini précédemment : des macrocellules opérant dans la bande sub-6GHz, des minicellules opérant dans la bande sub-6GHz et des minicellules opérant dans la bande millimétrique.

Nous supposerons ici que la stratégie d'association dans la bande sub-6GHz, entre macrocellule et petite cellule, est simplement basée sur un critère de puissance de réception. Plus précisément, si l'on note $P_{M\mu1}$ la puissance la plus élevée reçue d'une station MBS dans la bande sub-6 GHz et $P_{S\mu1}$ la puissance la plus élevée reçue d'une station SBS dans cette même bande (l'indice $M,S$ désigne respectivement une macrocellule et une petite cellule, $\mu$ désigne la bande sub-6GHz et 1 indique qu'il s'agit de la puissance la plus élevée) le terminal mobile s'associera à la station MBS en question si :

$$P_{M\mu1} > P_{S\mu1}$$

$$(10)$$

Le cas échéant, on pourra introduire un premier biais, $Q_\mu > 1$ pour favoriser un *offloading* c'est-à-dire un report d'une partie de la charge de trafic des macrocellules vers les petites cellules. Autrement dit, le terminal s'associera dans ce cas à la station MBS si :

$$P_{M\mu 1} > Q_\mu P_{S\mu 1} \tag{11}$$

En revanche, si la condition (10) (ou (11)) n'est pas vérifiée, l'association se fera avec la station SBS de plus forte puissance reçue, soit dans la bande sub-6GHz, soit dans la bande millimétrique en fonction de la classe de service requise par l'utilisateur.

On suppose que $K$ tranches de réseaux ont été créées sur la base du réseau multi-tier multi-RAT, chaque tranche de réseau $L_k$ étant définie par un ensemble de contraintes $\Lambda_{i,k}$ sur les métriques de qualité de service $QoS_i$, $i = 1,..., N$ du vecteur, **QoS.**

On se place tout d'abord dans le cadre des premier et second modes de réalisation décrits précédemment. Pour chaque tranche de réseau, on détermine les ensembles de valeurs de biais permettant de satisfaire chacune de ces contraintes : $SQ_{i,k} = \{Q_R | QoS_i \geq \rho_{i,k}\}$ (ou $SQ_{i,m} = \left\{ Q_R \middle| QoS_i \geq \rho_{i,m}^* \right\}$ dans le cas discrétisé). On calcule ensuite la valeur optimale de biais, $Q_{R,k}^{opt}$, (au moyen de l'expression (5) ou (6)) permettant de maximiser la fonction d'objectif $f_k$ **(QoS)** associée à la tranche de réseau $L_k$ sur l'intersection de ces ensembles.

Le terminal mobile s'associe alors à la station de base SBS dans la bande sub-6GHz si :

$$P_{S\mu 1} > Q_{R,k}^{opt} P_{Sm1} \tag{12}$$

où $P_{Sm1}$ désigne la puissance de la station de base SBS en question dans la bande millimétrique, et s'associe à cette station de base dans la bande millimétrique dans le cas inverse.

On comprend de l'expression (12), que selon la classe de service souhaitée, par exemple une classe eMBB ou URLLC, le terminal mobile pourra s'associer à la petite cellule dans la bande sub-6GHz ou dans la bande millimétrique.

Qui plus est, un même terminal mobile pourra simultanément avoir recours à des classes de services différentes pour des applications distinctes. Dans ce cas, le terminal mobile pourra être associé dans la bande sub-6GHz pour une première application et dans la bande millimétrique pour une seconde application.

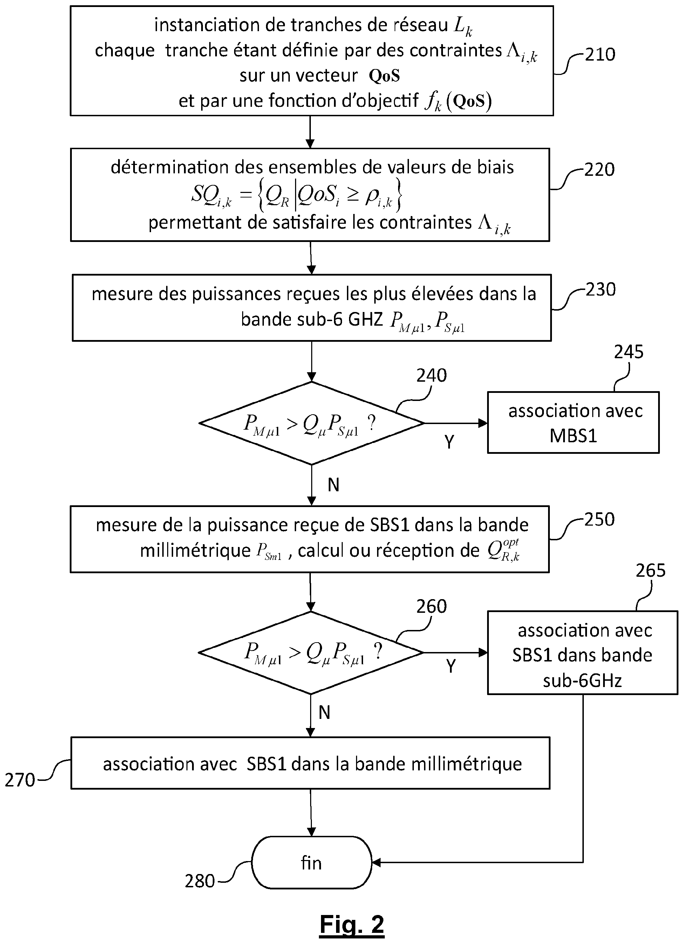

La Fig. 2 représente de manière schématique un ordinogramme d'une méthode d'association selon un mode particulier de réalisation de l'invention, dans le cas d'un réseau HetNet multi-RAT.

Les étapes 210, 220 sont identiques aux étapes 110 et 120 et leur description ne sera donc pas reprise ici.

A l'étape 230, le terminal mobile mesure la puissance reçue des stations de base environnantes dans la bande sub-6 GHz et détermine la puissance reçue la plus élevée reçue d'une station de base MBS, $P_{M\mu 1}$, ainsi que la puissance reçue la plus élevée reçue d'une station de base SBS, $P_{S\mu 1}$. Les deux stations de base SBS et MBS sont ainsi identifiées.

A l'étape 240, le terminal mobile vérifie si $P_{M\mu 1} > Q_\mu P_{S\mu 1}$. Dans l'affirmative, il s'associe en 245 à la station de base MBS précédemment identifiée.

Dans la négative, le terminal mobile reçoit du réseau (ou calcule dans le 2nd mode de réalisation) la valeur optimale $Q_{R,k}^{opt}$ en 250 et mesure la puissance reçue de la station SBS précédemment identifiée, dans la bande milli-métrique, $P_{Sm1}$.

A l'étape 260, le terminal mobile vérifie si $P_{S\mu 1} > Q_{R,k}^{opt} P_{Sm1}$. Dans l'affirmative, pour être servi par la tranche de réseau, $L_k$, il s'associe avec la station de base SBS dans la bande sub-6 GHz en 265, et, dans la négative, avec la station de base SBS dans la bande millimétrique en 270. Le processus d'association s'achève dans tous les cas en 280.

Les troisième et quatrième modes de réalisation de l'invention s'appliquent également au cas d'un réseau HetNet multi-RAT.

En particulier, le calcul de la valeur optimale de biais pourra être effectué en maximisant une fonction d'objectif portant non plus sur une métrique de QoS d'un utilisateur donné mais sur celle d'une tranche de réseau. Ainsi, par exemple, dans le cas d'une tranche de réseau eMBB on pourra souhaiter maximiser le débit moyen sur voie descendante de l'ensemble des utilisateurs de cette tranche, soit :

$$Q_{R,L_k}^{opt}(\boldsymbol{\rho}) = \underset{Q_R}{\arg\max}\left( F_{eMBB}(\mathbf{QoS}) \middle| Q \in \overset{N}{\underset{i=1}{I}} SQ_{i,k} \right) \tag{13-1}$$

avec

$$F_{eMBB}(\mathbf{QoS}) = \frac{\sum_{p=1}^{P_k} \lambda_{down}^p}{P_k} \tag{13-2}$$

où $\lambda_{down}^p$ désigne le débit sur la voie descendante de l'utilisateur $p$ et $P_k$ est le nombre d'utilisateurs de la tranche $L_k$.

Le choix entre l'association avec la station de base SBS dans la bande sub-6GHz ou dans la bande millimétrique est alors effectué en comparant la puissance $P_{S\mu1}$ avec la puissance corrigée de la valeur de biais optimale ainsi obtenue $Q_{R,L_k}^{opt}P_{Sm1}$.

Enfin, le calcul de la valeur optimale de biais pourra être effectué en maximisant une fonction d'objectif portant sur une première métrique de qualité de service relative à une première tranche de réseau et une seconde métrique de qualité de service relative à une seconde tranche de réseau. Ainsi, par exemple, on pourra souhaiter maximiser le débit moyen sur voie descendante des utilisateurs d'une tranche de réseau eMBB ($L_k$) tout en minimisant la charge d'une tranche de réseau URLLC ($L_{k'}$), soit :

$$\left( Q_{R,L_k}^{opt}(\boldsymbol{\rho}), Q_{R',L_{k'}}^{opt}(\boldsymbol{\rho'}) \right) = \underset{Q_R, Q_{R'}}{\arg\max}\left( F_{eMBB,URLLC}(\mathbf{QoS}_k, \mathbf{QoS}_{k'}) \middle| Q_R \in \left( \overset{N}{\underset{i=1}{I}} SQ_{i,k} \right); Q_{R'} \in \left( \overset{N}{\underset{i=1}{I}} SQ_{i,k'} \right) \right) \tag{14-1}$$

avec $F_{eMBB,URLLC}(\mathbf{QoS}_k, \mathbf{QoS}_{k'}) = \dfrac{\sum_{p=1}^{P_k} \lambda_{down}^p}{P_k} - P_k$ , avec les mêmes conventions de notation que précédemment, le premier terme de la fonction d'objectif conjointe $F_{eMBB,URLLC}$ visant à maximiser le débit sur voie descendante de la tranche eMBB et le second terme à minimser la charge de la tranche URLLC.

## Revendications

1. Méthode d'association d'un terminal mobile à une cellule d'un réseau cellulaire comprenant au moins des cellules d'un premier type et des cellules d'un second type distinct du premier, une pluralité de tranches de réseau $L_k$, $k$ = 1,..., $K$ étant instanciées à partir dudit réseau cellulaire, chaque tranche de réseau $L_k$ offrant une classe de service $C_k$, **caractérisée par** une pluralité de contraintes $\Lambda_{i,k}$ $i$ = 1,.., $N$, $k$ = 1,..., $K$ sur des métriques de qualité de service, le terminal mobile mesurant la puissance la plus élevée reçue d'une cellule du premier type, $P_1$, et la puissance la plus élevée reçue d'une cellule du second type, $P_2$, le terminal mobile s'associant avec ladite cellule du premier type si $P_1 > QP_2$ et avec ladite cellule du second type sinon, où $Q$ est une valeur de biais, **caractérisée en ce que** le réseau détermine pour chaque contrainte $\Lambda_{i,k}$ un ensemble de valeurs de biais, $SQ_{i,k}$ permettant de satisfaire cette contrainte et que l'on en déduit la valeur de biais optimale, $Q_{R,k}^{opt}$, appartenant à l'intersection des ensembles $SQ_{i,k}$ $i$ = 1, .., $N$ permettant de maximiser une fonction d'objectif portant sur une métrique de qualité de service , et que le terminal mobile requérant une qualité de service $C_k$ s'associe avec ladite cellule du premier type si $P_1 > Q_{R,k}^{opt}P_2$ et avec ladite cellule du second type sinon.

**2.** Méthode d'association d'un terminal mobile à une cellule d'un réseau cellulaire selon la revendication 1, **caractérisée en ce que** la fonction d'objectif porte sur une métrique de qualité de service relative à la liaison entre le terminal mobile et une station de base d'une cellule du premier type ou du second type du réseau.

**3.** Méthode d'association d'un terminal mobile à une cellule d'un réseau cellulaire selon la revendication 2, **caractérisée en ce que** les métriques de qualité de service comprennent : la fiabilité de la liaison entre le terminal mobile et la station de base servant la cellule du premier type ou du second type, le débit de cette liaison sur la voie descendante, la couverture de la cellule du premier ou second type pour un niveau donné de rapport signal sur bruit plus interférence.

**4.** Méthode d'association d'un terminal mobile à une cellule d'un réseau cellulaire selon la revendication 2 ou 3, **caractérisée** en ce le réseau cellulaire est un réseau HetNet multi-RAT et que les classes de qualité de service comprennent les classes eMBB et URLLC.

**5.** Méthode d'association d'un terminal mobile à une cellule d'un réseau cellulaire selon la revendication 1, **caractérisée en ce que** le réseau détermine au préalable, pour une pluralité de contraintes prédéterminées, $\Lambda_{i,m}$ correspondant chacune à N-uplet de valeurs discrétisées de métriques de qualité de service $\left( \rho_{i,m}^{*} \right)$, des seconds ensembles de valeurs de biais ($SQ_{i,m}$) permettant de satisfaire respectivement chacune de ces contraintes prédéterminées.

**6.** Méthode d'association d'un terminal mobile à une cellule d'un réseau cellulaire selon la revendication 5, **caractérisée en ce que** lorsque le terminal mobile requiert une qualité de service $C_k$, le réseau détermine parmi la pluralité de contraintes prédéterminées, l'ensemble de celles ($\Lambda_{i,m_k}$), $i = 1,..., N$ qui est le mieux à même à satisfaire cette qualité de service, et lit dans une mémoire les seconds ensembles de valeurs de biais ($SQ_{i,m_k}$, $i = 1,..., N$) correspondants.

**7.** Méthode d'association d'un terminal mobile à une cellule d'un réseau cellulaire selon la revendication 5, **caractérisée en ce que** le réseau détermine la valeur optimale de biais appartenant à l'intersection des seconds ensembles ainsi lus, permettant de maximiser ladite fonction d'objectif.

**8.** Méthode d'association d'un terminal mobile à une cellule d'un réseau cellulaire selon la revendication 5, **caractérisée en ce que** le réseau transmet au terminal mobile les seconds ensembles ainsi lus et que le terminal mobile détermine la valeur optimale de biais appartenant à l'intersection des seconds ensembles ainsi lus, permettant de maximiser ladite fonction d'objectif.

**9.** Méthode d'association d'un terminal mobile à une cellule d'un réseau cellulaire selon la revendication 1, **caractérisée en ce que** la fonction d'objectif porte sur une métrique de qualité de service relative à une tranche du réseau ($L_k$), la valeur de biais optimale $\left( Q_{R,L_k}^{opt} \right)$ étant alors commune à tous les terminaux mobiles servis par cette tranche.

**10.** Méthode d'association d'un terminal mobile à une cellule d'un réseau cellulaire selon la revendication 1, **caractérisée en ce que** la fonction d'objectif porte sur une combinaison d'une première métrique de qualité de service relative à une première tranche du réseau ($L_k$) et d'une seconde métrique de qualité de service relative à une seconde tranche du réseau ($L_{k'}$), une première valeur de biais optimale $\left( Q_{R,L_k}^{opt} \right)$ étant alors commune à tous les terminaux mobiles servis par la première tranche de réseau et une seconde valeur de biais optimale $\left( Q_{R,L_{k'}}^{opt} \right)$ étant commune à tous les terminaux mobiles servis par la seconde tranche de réseau.

**Patentansprüche**

**1.** Verfahren zum Zuordnen eines mobilen Endgeräts zu einer Zelle eines zellularen Netzwerks, das zumindest Zellen eines ersten Typs und Zellen eines zweiten Typs, der sich vom ersten Typ unterscheidet, umfasst, wobei eine Vielzahl von Netzwerkscheiben $L_k$, $k = 1, ..., K$ aus dem zellularen Netzwerk instanziiert werden, wobei jede Netzwerkscheibe $L_k$ eine Dienstklasse $C_k$ anbietet, **gekennzeichnet durch** eine Vielzahl von Einschränkungen $\Lambda_{i,k}$, $i = 1, ..., N$, $k = 1, ..., K$ auf Dienstgütemetriken, wobei das mobile Endgerät die höchste von einer Zelle des ersten Typs empfangene Leistung $P_1$ und die höchste von einer Zelle des zweiten Typs empfangene Leistung $P_2$ misst, wobei das mobile Endgerät sich mit der Zelle des ersten Typs verknüpft, wenn $P_1 > QP_2$, worin Q ein Bias-Wert ist, und sich andernfalls mit der Zelle des zweiten Typs verknüpft, **dadurch gekennzeichnet, dass** das Netzwerk für jede Einschränkung $\Lambda_{i,k}$ eine Menge von Bias-Werten $SQ_{i,k}$ bestimmt, mit der diese Einschränkung erfüllt werden kann, und dass davon der optimale Bias-Wert $Q_{R,k}^{opt}$ abgeleitet wird, der zur Schnittmenge $SQ_{i,k}$, $i = 1, ..., N$ gehört und mit dem eine Zielfunktion maximiert werden kann, die eine Dienstgütemetrik betrifft, und dass das mobile Endgerät, das eine Dienstgüte $C_k$ anfordert, sich mit der Zelle des ersten Typs dann verknüpft, wenn $P_1 > Q_{R,k}^{opt} P_2$, und sich andernfalls mit der Zelle des zweiten Typs verknüpft.

2. Verfahren zum Zuordnen eines mobilen Endgeräts zu einer Zelle eines zellularen Netzwerks nach Anspruch 1, **dadurch gekennzeichnet, dass** die Zielfunktion eine Dienstgütemetrik betrifft, die sich auf die Verbindung zwischen dem mobilen Endgerät und einer Basisstation einer Zelle des ersten Typs oder des zweiten Typs des Netzwerks bezieht.

3. Verfahren zum Zuordnen eines mobilen Endgeräts zu einer Zelle eines zellularen Netzwerks nach Anspruch 2, **dadurch gekennzeichnet, dass** die Dienstgütemetriken umfassen: die Zuverlässigkeit der Verbindung zwischen dem mobilen Endgerät und der Basisstation, die die Zelle des ersten Typs oder des zweiten Typs bedient, den Durchsatz dieser Verbindung auf dem Abwärtskanal, die Abdeckung der Zelle des ersten oder zweiten Typs für einen gegebenen Pegel des Signal-Rausch-Verhältnisses plus Interferenz.

4. Verfahren zum Zuordnen eines mobilen Endgeräts zu einer Zelle eines zellularen Netzwerks nach Anspruch 2 oder 3, **dadurch gekennzeichnet, dass** das zellulare Netzwerk ein HetNet-Multi-RAT-Netzwerk ist und dass die Dienstgüteklassen die Klassen eMBB und URLLC umfassen.

5. Verfahren zum Zuordnen eines mobilen Endgeräts zu einer Zelle eines zellularen Netzwerks nach Anspruch 1, **dadurch gekennzeichnet, dass** das Netzwerk vorab für eine Vielzahl von vorbestimmten Einschränkungen $\Lambda_{i,m}$, die jeweils N-Tupel diskretisierten Werten von Dienstgütemetriken $\left(\rho_{i,m}^{*}\right)$ entsprechen, zweite Mengen von Bias-Werten $(SQ_{i,m})$ bestimmt, mit denen jede dieser vorbestimmten Einschränkungen jeweils erfüllt werden kann.

6. Verfahren zum Zuordnen eines mobilen Endgeräts zu einer Zelle eines zellularen Netzwerks nach Anspruch 5, **dadurch gekennzeichnet, dass** dann, wenn das mobile Endgerät eine Dienstgüte $C_k$ anfordert, das Netzwerk aus der Vielzahl von vorbestimmten Einschränkungen die Menge derjenigen $(\Lambda_{i,m_k})$, $i = 1, ..., N$ bestimmt, die am besten geeignet ist, diese Dienstgüte zu erfüllen, und aus einem Speicher die entsprechenden zweiten Mengen von Bias-Werten $(SQ_{i,m_k}$, $i = 1, ... N)$ ausliest.

7. Verfahren zum Zuordnen eines mobilen Endgeräts zu einer Zelle eines zellularen Netzwerks nach Anspruch 5, **dadurch gekennzeichnet, dass** das Netzwerk den optimalen Bias-Wert bestimmt, der zur Schnittmenge der so ausgelesenen zweiten Mengen gehört und es ermöglicht, die Zielfunktion zu maximieren.

8. Verfahren zum Zuordnen eines mobilen Endgeräts zu einer Zelle eines zellularen Netzwerks nach Anspruch 5, **dadurch gekennzeichnet, dass** das Netzwerk die so ausgelesenen zweiten Mengen an das mobile Endgerät überträgt und dass das mobile Endgerät den optimalen Bias-Wert bestimmt, der zur Schnittmenge der so ausgelesenen zweiten Mengen gehört und es ermöglicht, die Zielfunktion zu maximieren.

9. Verfahren zum Zuordnen eines mobilen Endgeräts zu einer Zelle eines zellularen Netzwerks nach Anspruch 1, **dadurch gekennzeichnet, dass** die Zielfunktion eine Dienstgütemetrik betrifft, die sich auf eine Netzwerkscheibe $(L_k)$ bezieht, wobei der optimale Bias-Wert $\left(Q_{R,L_k}^{opt}\right)$ dann allen mobilen Endgeräten gemeinsam ist, die von dieser Netzwerkscheibe bedient werden.

10. Verfahren zum Zuordnen eines mobilen Endgeräts zu einer Zelle eines zellularen Netzwerks nach Anspruch 1, **dadurch gekennzeichnet, dass** die Zielfunktion eine Kombination aus einer ersten Dienstgütemetrik bezüglich einer ersten Netzwerkscheibe $(L_k)$ und einer zweiten Dienstgütemetrik bezüglich einer zweiten Netzwerkscheibe

$(L_{k'})$ betrifft, wobei ein erster optimaler Bias-Wert $\left(Q_{R,L_k}^{opt}\right)$ dann allen mobilen Endgeräten gemeinsam ist, die von der ersten Netzwerkscheibe bedient werden, und ein zweiter optimaler Bias-Wert $\left(Q_{R,L_{k'}}^{opt}\right)$ allen mobilen Endgeräten gemeinsam ist, die von der zweiten Netzwerkscheibe bedient werden.

**Claims**

1. Method of associating a mobile terminal with a cell of a cellular network comprising at least cells of a first type and cells of a second type distinct from the first, a plurality of network slices $L_k$, $k = 1,..., K$ being instantiated from said cellular network, each network slice $L_k$ providing a class of service $C_k$, **characterized by** a plurality of constraints $\Lambda_{i,k}$, $i = 1, .., N$, $k = 1,..., K$ on quality of service metrics, the mobile terminal measuring the highest power received from a cell of the first type, $P_1$, and the highest power received from a cell of the second type, $P_2$, the mobile terminal associating with said cell of the first type if $P_1 > QP_2$ and with said cell of the second type otherwise, in which $Q$ is a bias value, **characterized in that** the network determines for each constraint $\Lambda_{i,k}$ a set of bias values, $SQ_{i,k}$, making it possible to satisfy that constraint and that that deduction is made of the optimal bias value, $Q_{R,k}^{opt}$, belonging to the intersection of the sets $SQ_{i,k}$, $i = 1,.., N$ making it possible to maximize an objective function relating to a quality of service metric, and that the mobile terminal requiring a quality of service $C_k$ associations with said cell of the first type if $P_1 > Q_{R,k}^{opt} P_2$ and with said cell of the second type otherwise.

2. Method of associating a mobile terminal with a cell of a cellular network according to claim 1, **characterized in that** the objective function relates to a quality of service metrics relative to the connection between the mobile terminal and a base station of a cell of the first type or of the second type of network.

3. Method of associating a mobile terminal with a cell of a cellular network according to claim 2, **characterized in that** the quality of service metrics comprise: the reliability of the connection between the mobile terminal and the base station serving the cell of the first type or of the second type, the throughput of that connection over the downlink, the coverage of the cell of the first or second type for a given level of signal to noise ratio plus interference.

4. Method of associating a mobile terminal with a cell of a cellular network according to claim 2 or 3, **characterized in that** the cellular network is a multi-RAT HetNet network and **in that** the quality of service classes include eMBB and URLLC.

5. Method of associating a mobile terminal with a cell of a cellular network according to claim 1, **characterized in that** the network determines in advance, for a plurality of predetermined constraints, $\Lambda_{i,m}$ each corresponding to N-tuple discretized values of quality of service metrics $\left(\rho_{i,m}^*\right)$, of the second sets of bias values ($SQ_{i,m}$) making it possible to respectively satisfy each of these predetermined constraints.

6. Method of associating a mobile terminal with a cell of a cellular network according to claim 5, **characterized in that** when the mobile terminal requires a quality of service $C_k$, the network determines from among the plurality of predetermined constraints, the set of cells ($\Lambda_{i,m_k}$), $i = 1,..., N$ which is the best able to satisfy that quality of service, and reads from a memory the corresponding second sets of bias values ($SQ_{i,m_k}$, $i = 1,..., N$).

7. Method of associating a mobile terminal with a cell of a cellular network according to claim 5, **characterized in that** the network determines the optimal bias value belonging to the intersection between the second sets so read, enabling said objective function to be maximized.

8. Method of associating a mobile terminal with a cell of a cellular network according to claim 5, **characterized in that** the network sends the mobile terminal the second sets so read and the mobile terminal determines the optimal bias value belonging to the intersection between the second sets thus read, enabling said objective function to be maximized.

9. Method of associating a mobile terminal with a cell of a cellular network according to claim 1, **characterized in that** the objective function relates to a quality of service metric relative to a slice of the network ($L_k$), the optimal bias value $(Q_{R,L_k}^{opt})$ then being common to all the mobile terminals served by that slice.

10. Method of associating a mobile terminal with a cell of a cellular network according to claim 1, **characterized in that** the objective function relates to a combination of a first quality of service metric concerning a first slice ($L_k$) of the network and a second quality of service metric concerning a second slice ($L_{k'}$) of the network, a first optimal bias value $(Q_{R,L_k}^{opt})$ then being common to all the mobile terminals served by the first network slice and a second optimal bias value $(Q_{R,L_{k'}}^{opt})$ being common to all the mobile terminals served by the second network slice.

instanciation de tranches de réseau $L_k$
chaque tranche étant définie par des contraintes $\Lambda_{i,k}$
sur un vecteur **QoS**
et par une fonction d'objectif $f_k(\mathbf{QoS})$

— 110

détermination des ensembles de valeurs de biais
$$SQ_{i,k} = \left\{ Q_R \middle| QoS_i \geq \rho_{i,k} \right\}$$
permettant de satisfaire les contraintes $\Lambda_{i,k}$

— 120

détermination de la valeur optimale de biais
$$Q_{R,k}^{opt}(\boldsymbol{\rho}) = \arg\max_{Q_R} \left( f_k(\mathbf{QoS}) \middle| Q_R \in \bigcap_{i=1}^{N} SQ_{i,k} \right)$$

— 130

mesure de la puissance reçue la plus élevée
d'une cellule BS1 du premier type: $P_1$
et d'une cellule BS2 du second type: $P_2$

— 140

$$P_1 > Q_{R,k}^{opt}(\boldsymbol{\rho}) P_2 \ ?$$

— 150

Y → association avec BS1 — 155

N

association avec BS2 — 160

## Fig. 1

instanciation de tranches de réseau $L_k$
chaque tranche étant définie par des contraintes $\Lambda_{i,k}$
sur un vecteur **QoS**
et par une fonction d'objectif $f_k(\mathbf{QoS})$ — 210

détermination des ensembles de valeurs de biais
$$SQ_{i,k} = \left\{ Q_R \middle| QoS_i \geq \rho_{i,k} \right\}$$
permettant de satisfaire les contraintes $\Lambda_{i,k}$ — 220

mesure des puissances reçues les plus élevées dans la
bande sub-6 GHZ $P_{M\mu 1}, P_{S\mu 1}$ — 230

240    $P_{M\mu 1} > Q_\mu P_{S\mu 1}$ ?    Y → association avec MBS1    245

N

mesure de la puissance reçue de SBS1 dans la bande
millimétrique $P_{Sm1}$ , calcul ou réception de $Q_{R,k}^{opt}$ — 250

260    $P_{M\mu 1} > Q_\mu P_{S\mu 1}$ ?    Y → association avec SBS1 dans bande sub-6GHz    265

N

270 — association avec SBS1 dans la bande millimétrique

280 — fin

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3089516 A

- EP 3451726 A

**Littérature non-brevet citée dans la description**

- **G. GHATAK et al.** Coverage analysis and load balancing in HetNets with mm-wave multi-RAT small cells. *IEEE Transactions on Wireless Communications,* Mai 2018, vol. 17 (5), 3154-3169
- Network slicing via function décomposition and flexible network design. **D.S. MICHALOPOULOS et al.** Personal, Indoor, and Mobile Radio Communications (PIMRC), 2017 IEEE 28th Annual International Symposium. IEEE, 2017, 1-6

- **G. GHATAK ; A. DE DOMENICO ; M. COUPE-CHOUX.** Coverage Analysis and Load Balancing in HetNets With Millimeter Wave Multi-RAT Small Cells. *IEEE Transactions on Wireless Communications,* Mai 2018, vol. 17 (5), 3154-3169